# FASCICULE DE BREVET EUROPEEN

(11) **EP 2 223 364 B1**
(45) Date de publication et mention de la délivrance du brevet: **11.01.2017**
(21) Numéro de dépôt: 08865152.6
(22) Date de dépôt: 04.12.2008
(51) Int. Cl.: H01G 9/008, H01G 9/00, H01G 11/10, H01G 11/18, H01G 11/78, H01G 2/04, H01G 2/08

(54) **DISPOSITIF D'ALIMENTATION ÉLECTRIQUE COMPORTANT UN BAC DE RÉCEPTION D'UNITÉS DE STOCKAGE À ULTRA CAPACITÉ**
STROMVERSORGUNGSVORRICHTUNG MIT EIN BEHÄLTER FÜR HOCH KAPAZITÄT SPEICHEREINHEIT
ELECTRICAL POWER SUPPLY DEVICE COMPRISING A TRAY FOR ACCOMMODATING ULTRA-HIGH CAPACITY STORAGE UNITS

(30) Priorité: 06.12.2007 FR 0759606
(43) Date de publication de la demande: 01.09.2010
(73) Titulaire: Valeo Equipements Electriques Moteur, 94046 Créteil Cedex (FR)
(72) Inventeur: GUERIN, Fabien, F-92320 Chatillon (FR); ABADIA, Roger, F-93360 Neuilly-plaisance (FR); RONDIER, Patrick, F-95360 Montmagny (FR)
(74) Mandataire: de Lambilly Delorme, Marie Pierre
(86) Numéro de dépôt international: PCT/FR2008/052201
(87) Numéro de publication internationale: WO 2009/080936

(56) Documents cités:
- WO-A-98/14965
- DE-A1- 19 814 700
- FR-A- 2 492 577
- FR-A- 2 883 670
- GB-A- 1 567 519
- US-A- 4 670 814
- US-B1- 6 541 942

## Description

### Domaine de l'invention

L'invention se rapporte à un dispositif d'alimentation électrique pour un véhicule automobile, qui comporte un bac dans lequel est agencé au moins une unité de stockage d'énergie électrique à Ultra capacité, qui est susceptible d'émettre de la chaleur, ledit bac comportant au moins un logement de réception d'au moins une unité de stockage d'énergie électrique.

### Etat de la technique

On connaît de nombreux exemples de dispositifs de ce type.

De tels dispositifs d'alimentation électrique sont par exemple utilisés pour l'alimentation de machines électriques de véhicules automobiles de type électrique et/ou hybride, c'est à dire combinant une machine électrique et un moteur thermique conventionnel, pour lesquels il est important de pouvoir récupérer l'énergie cinétique afin de recharger la batterie du véhicule et d'approvisionner le réseau de bord en puissance électrique. Cette fonction est couramment appelée freinage récupératif. Une batterie de type métal hydrure est par exemple utilisée.

Ces dispositifs d'alimentation électrique posent toutefois de nombreux problèmes.

En effet, les unités de stockage d'énergie subissent de nombreux cycles de charge et de décharge. Par exemple, lorsque le véhicule automobile démarre, il se produit une décharge d'électricité très intense. Par exemple encore, les unités de stockage sont chargées avec un courant électrique de forte intensité lors des périodes de freinage récupératif.

Lorsque du courant électrique est libéré, lors des opérations de décharge, ou stocké, lors des opérations de charge, les unités de stockage à Ultra capacité dégagent plus de chaleur que les batteries traditionnelles. La quantité de chaleur dégagée est proportionnelle à l'intensité du courant électrique qui circule en charge ou en décharge.

De plus, ces cycles de charge et de décharge sont susceptibles de se succéder à un rythme très élevé, notamment lorsque le véhicule roule en ville et que le conducteur est amené à arrêter et à redémarrer fréquemment le véhicule.

Or, pour que les unités de stockage puissent stocker efficacement le courant électrique, elles doivent être maintenues en deçà d'une température maximale de fonctionnement.

Lorsque les cycles de charge et de décharge s'enchaînent rapidement, la température des unités de stockage est susceptible de monter très vite au-delà de la température maximale de fonctionnement. La montée en température des unités de stockage est d'autant plus rapide que les unités de stockage sont agencées dans un bac fermé.

De plus, lorsque la durée de vie de chaque unité de stockage dépend des variations de température auxquelles elles sont exposées. Ainsi, il est fréquent, selon l'agencement de chaque unité de stockage, qu'une unité de stockage soit soumise à de plus fortes variations de température que les autres. Cette unité de stockage a donc une courte durée de vie par rapport aux autres unités de stockage.

Lorsqu'une seule unité de stockage est défectueuse, il est alors plus simple de remplacer toutes les unités de stockage en même temps malgré le fait que les autres unités de stockage peuvent encore fonctionner. Ceci entraîne donc des dépenses inutiles.

Dans le document FR 2 883 760, conforme au préambule de la revendication 1, on fait appel à de la paraffine qui sert à limiter les surchauffes autour d'une température.

### Objet de l'invention

Pour remédier à tous ces inconvénients, l'invention propose un dispositif d'alimentation électrique du type décrit précédemment caractérisé par la partie caractérisante de sa revendication 1.

Grâce à l'invention on homogénéise la température des unités de stockage d'énergie et on évacue bien la chaleur.

La résine thermo-conductrice ne changent pas d'état contrairement à un matériau thermorégulateur tel que de la paraffine, qui change d'état (solide-liquide) sans changement simultané de température.

La paraffine, d'une manière générale le matériau thermorégulateur, sert à stocker la chaleur et à limiter les surchauffes autour d'une température variant faiblement.

La résine et le bac thermo-conducteur l'invention servent à limiter les surchauffes autour d'une température variant sur une plus grande plage. La solution selon l'invention permet de mieux évacuer la chaleur et est donc plus fiable.

En outre la paraffine est amenée à se liquéfier lors de son changement d'état en sorte qu'il faut prévoir des entretoises spéciales, telles que des colliers élastiques comme décrit dans le document FR 2 883 670, entre les unités de stockage d'énergie et /ou les logements.

Grâce à l'invention on supprime ces entretoises car la résine selon l'invention restent à l'état solide et servent à caler les unités de stockage d'énergie.

La solution selon l'invention permet donc de diminuer le nombre de pièces et est donc simple et économique.

Selon d'autres caractéristiques de l'invention prises isolément ou en combinaison :
- chaque logement comporte une paroi individuelle de manière que les faces extérieures des logements forment la face extérieure du bac;
- la face extérieure du logement est ondulée ;
- le logement est borgne et les unités de stockage d'énergie électrique sont calées au fond (du logement borgne par une couche de colle thermo-conductrice ;
- la colle est électriquement isolante ;
- les logements sont d'orientation verticale et la résine thermo-conductrice s'étend sur moins de 80% de la hauteur verticale du logement ;
- les logements sont d'orientation longitudinale ou transversale et la résine thermo-conductrice s'étend sur moins de 80% de la hauteur verticale du logement;
- la résine thermo-conductrice s'étend globalement sur 50% de la hauteur verticale du logement;
- l'épaisseur de la résine thermo-conductrice ou de la colle est inférieure ou égale à 2 mm;
- l'épaisseur de résine ou de la colle est globalement égale à 1 mm ;
- le logement est un logement de réception d'une paire d'unité de stockage d'énergie électrique; qui sont agencées de manière adjacente dans le logement de réception commun de forme oblongue;
- le logement commun a globalement une forme de huit.
- chaque logement est globalement en forme de demi huit.
- les logements sont d'orientation transversale et/ou longitudinale et appartiennent à un bac fermé par un couvercle constituant un capot pour les des unités de stockage d'énergie et le bac ;
- le bac est métallique.

D'autres avantages apparaîtront à la lumière de la description qui va suivre en regards des dessins annexés.

### Brève description des dessins

- la figure 1 est un schéma de principe d'un dispositif d'alimentation électrique selon l'invention ;
- la figure 2 est une vue en perspective éclatée qui représente un bac réalisé selon les enseignements de l'invention, ainsi que les unités de stockage destinées à être reçues dans le bac ;
- la figure 3 est une vue de dessus qui représente les unités de stockage reçues dans le bac de la figure 3 ;
- la figure 4 est une vue en section selon le plan de coupe 4-4 de la figure 3 ;
- la figure 5 est une vue en section selon le plan de coupe 5-5 de la figure 3 ;
- la figure 6 est une vue similaire à celle de la figure 4 qui représente le bac réalisé selon un deuxième mode de l'invention ;
- la figure 7 est une vue similaire à celle de la figure 5, qui représente le bac réalisé selon le deuxième mode de l'invention ;
- la figure 8 est une vue de dessus qui représente un bac réalisé selon un troisième mode de réalisation de l'invention ;
- la figure 9 est une vue en perspective éclatée d'un boîtier selon un quatrième mode de réalisation de l'invention ;
- la figure 10 est une vue en coupe transversale du boîtier de la figure 9 ;
- la figure 11 est une vue en perspective d'un boîtier selon un cinquième mode de réalisation de l'invention ;
- la figure 12 est une vue en perspective éclatée du boîtier de la figure 11 ;
- la figure 13 est vue de face du bac de support des unités de stockage d'énergie électrique de la figure 12 ;
- la figure 14 est une vue en coupe d'un boîtier pour un sixième mode de réalisation de l'invention ;
- la figure 15 est une vue schématique de face pour un septième exemple de réalisation selon l'invention ;
- les figures 16 et 17 sont des vues analogues à la figure 15 pour deux variantes de réalisation de celle-ci.

### Description d'exemples de réalisation de l'invention

Dans la description qui va suivre, on adoptera à titre non limitatif des orientations longitudinale, verticale et transversale indiquées par le trièdre "L,V,T" des figures.

Dans la description qui va suivre, des chiffres de référence identiques désignent des pièces identiques ou ayant des fonctions similaires.

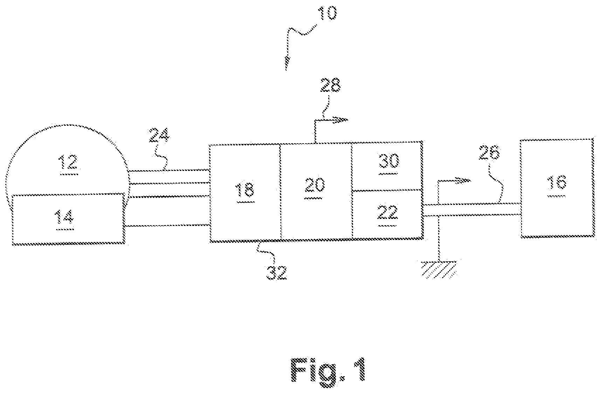

On a représenté à la figure 1 l'ensemble d'un dispositif 10 d'alimentation électrique pour un véhicule automobile réalisé conformément à l'invention.

Le dispositif 10 est destiné à relier au moins une machine électrique tournante 12 à au moins une batterie 16 du véhicule automobile. La machine 12 est munie de capteurs 14 et est susceptible de fonctionner en moteur électrique, par exemple pour démarrer le moteur thermique voire entraîner au moins une roue du véhicule et/ou en générateur électrique, par exemple pour récupérer l'énergie cinétique du véhicule lors d'un freinage. Cette machine, appelée alterno-démarreur, est réversible. Cette machine est prise comme exemple non limitatif pour la suite de la description.

Pour mémoire on rappellera qu'un alterno-démarreur est un alternateur réversible permettant, d'une part, de transformer de l'énergie mécanique en énergie électrique lorsqu'il fonctionne en mode générateur électrique pour notamment recharger au moins une batterie et /ou alimenter les consommateurs d'au moins un réseau de bord du véhicule automobile et d'autre part, de transformer de l'énergie électrique en énergie mécanique lorsqu'il fonctionne en mode moteur électrique, dit mode démarreur, pour notamment démarrer le moteur à combustion interne ou moteur thermique du véhicule automobile et, dans un mode de réalisation, éviter que le moteur thermique cale, voire entraîner au moins une roue du véhicule.

Cet alterno-démarreur comporte des moyens de redressement de courant appartenant à un onduleur comportant des branches. Ces moyens de redressement sont montés dans les branches de l'onduleur et consistent par exemple en des transistors du type MOSFET pilotés par une unité électronique de commande et de contrôle comme décrit par exemple dans les documents FR A 2 745 444 et FR A 2 745 445.

Cette unité électronique de commande et de contrôle reçoit des signaux provenant de capteurs 14 de la position angulaire du rotor de la machine et comporte également des pilotes, dits drivers, qui sont des éléments de puissance et qui commandent les transistors du type MOSFET. Ces pilotes, dans un mode de réalisation, appartiennent à un étage de puissance comprenant également les transistors du type MOSFET de l'onduleur constituant un convertisseur électrique réversible de courant alternatif-continu dit « AC/DC » en mode générateur électrique. En mode moteur électrique, les transistors MOSFET de l'onduleur sont pilotés en tout ou rien pour commander en pleine onde les enroulements du stator de la machine ou en variante par une commande à largeurs d'impulsions variables, c'est à dire une technologie de découpage appelé MLI (modulation par largeur d'impulsion) ou PWM en anglais.

Les éléments de contrôle appartiennent à un étage de contrôle de plus faible puissance.

Dans un mode de réalisation, l'étage de puissance comprend une carte électronique de puissance portant les éléments de puissance, tels que les transistors du type MOSFET et les drivers, et l'étage de contrôle comprend une carte électronique de commande portant les éléments de contrôle.

Dans ces documents précités l'alterno-démarreur est polyphasé. Dans un mode de réalisation, tel que décrit dans les documents WO-A-02/08.334, et WO-A-03/088.471, l'alterno-démarreur appartient à un agencement pour véhicule automobile comportant au moins deux unités de stockage d'énergie électrique. L'une de ces unités de stockage est une batterie et l'autre un super condensateur c'est-à-dire une capacité de grande valeur appelée Ultra capacité.

Dans le document WO 02/080334 le dispositif d'alimentation électrique est destiné à relier la machine électrique tournante à deux batteries appartenant à des réseaux de bord de tension différente.

Ici l'Ultra capacité comporte plusieurs unités élémentaires de stockage d'énergie à Ultra capacité, comme décrit ci-après. On notera qu'en mode démarreur (fonctionnement en mode moteur électrique), l'agencement permet d'alimenter l'alterno-démarreur avec une tension supérieure à celle en mode générateur.

Ce type d'agencement permet de récupérer de l'énergie lors du freinage et comporte deux réseaux électriques de distribution, au moins un commutateur ou un circuit à deux interrupteurs et un convertisseur continu-continu, dit convertisseur DC/DC, permettant de convertir des tensions et de fonctionner à deux tensions différentes.

Pour plus de précisions on se reportera à ces documents sachant que l'onduleur est un convertisseur électronique de courant.

Bien entendu, l'agencement peut faire appel à une machine électrique tournante telle qu'un alternateur simple relié électriquement à une batterie.

Dans un mode de réalisation cet alternateur est associé à un démarreur monté en parallèle avec l'alternateur entre une première borne reliée à la masse et une deuxième borne relié à un circuit permettant dans un mode de réalisation de mettre en série deux batteries, par exemple de 12V, pour alimenter le démarreur en 24V au démarrage et de mettre en parallèle ces deux batteries après le démarrage du véhicule automobile.

Le dispositif 10 comporte donc au moins un convertisseur électronique 18, 22 et une unité 20 de stockage d'énergie électrique à Ultra capacité. Ce dispositif comporte deux réseaux électriques, l'un dédié à la puissance (les unités de stockage 20 étant en série) et adapté à la récupération d'énergie, l'autre dédié à l'énergie pour notamment recharger la batterie 16 connectée au réseau de bord du véhicule et/ou alimenter ce réseau de bord.

Dans un premier mode de réalisation non limitatif, le dispositif 10 comporte un convertisseur continu-continu 22 de tension.

Dans un deuxième mode de réalisation non limitatif, le dispositif 10 comporte un onduleur 18. L'onduleur est un convertisseur réversible DC/AC. Il fonctionne en convertisseur AC/DC lorsque la machine est en mode générateur électrique (il est souvent appelé pont redresseur), et en convertisseur DC/AC lorsque la machine est en mode moteur électrique.

Dans un troisième mode de réalisation non limitatif, le dispositif 10 comporte un onduleur 18 et un convertisseur continu-continu 22.

Dans un quatrième mode de réalisation, dans l'exemple de réalisation non limitatif qui a été représenté à la figure 1, le dispositif 10 comporte trois convertisseurs électroniques, à savoir un onduleur 18, un convertisseur continu-continu 22, et en plus un interrupteur bi-position 30 ou deux interrupteurs 30, qui sont reliés entre eux par des connectiques de puissance tels que des bus barres (non représentés).

L'onduleur 18, de manière précitée, est un convertisseur électrique réversible de courant alternatif-continu dit "AC/DC" en mode générateur électrique ou continu alternatif dit "DC/AC" en mode moteur électrique.

Le convertisseur continu-continu 22 permet notamment de convertir une tension côté unité de stockage d'énergie 20, ladite tension se situant dans une plage de valeurs, ici de manière non limitative entre 6V et 35V, en une tension compatible avec celle de la batterie 16, la batterie alimentant un réseau de bord par exemple de l'ordre de 12 volts.

L'interrupteur bi-position 30 ou les deux interrupteurs 30 permettent quant à eux de déterminer le mode de fonctionnement de la machine électrique 12.

Dans l'exemple pris, le mode générateur comprend deux phases : une phase dite alternateur, et une phase dite récupératrice d'énergie, le mode moteur comprend une phase de démarrage et d'assistance dynamique.

Le mode de fonctionnement de la machine avec un interrupteur bi-position est le suivant :
- l'interrupteur relie l'onduleur 18 et l'unité de stockage 20 dans le mode moteur, et dans la phase récupératrice d'énergie,
- l'interrupteur relie l'onduleur 18 et la batterie 16 dans la phase alternateur.

On notera que dans un autre mode de réalisation, il n'existe pas d'interrupteur.

Le dispositif 10 est à cet effet relié par des câbles 24 à la machine électrique, par des câbles 26 à la batterie, et par des câbles 28 à un réseau d'alimentation électrique du véhicule.

Le dispositif 10 permettant de récupérer l'énergie cinétique du véhicule à l'aide de la machine électrique, cette architecture est plus particulièrement connue sous le nom d'architecture "14+X".

Comme l'illustre la figures 1, le dispositif 10 comporte un boîtier unique 32 dans lequel sont agencés le(s) convertisseur(s) électronique(s) 18, 22 et le(s) unité(s) 20 de stockage d'énergie électrique notamment pour réduire les longueurs des connectiques entre ces éléments, de manière à limiter les effets des inductances de liaison.

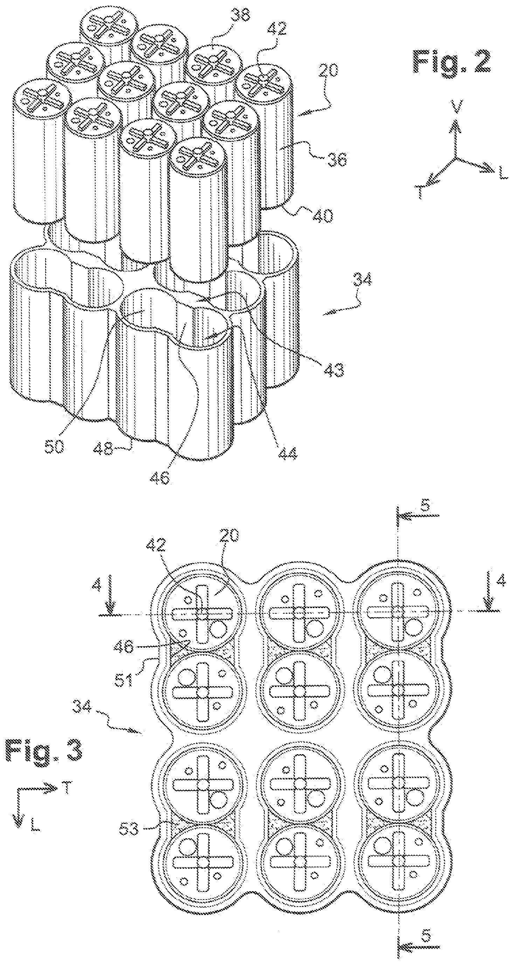

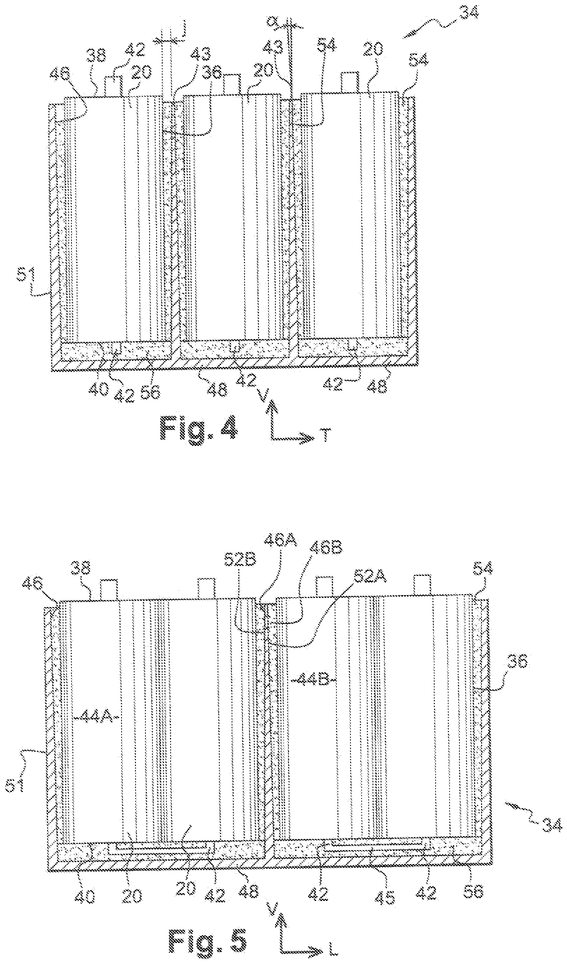

Pour plus de précision on se reportera par exemple au document FR 2 883 670, notamment à la figure 5 de celui-ci montrant en perspective le boîtier unique comportant une bac inférieure, recevant le ou les unités de stockage d'énergie, et une partie supérieure, formant couvercle pour le bac inférieur et recevant le ou les convertisseurs électroniques. En variante le ou les convertisseurs électroniques sont déportés en sorte que la partie supérieure peut être simplifiée. Cette partie supérieure peut, dans un mode de réalisation consister en une plaque à ailettes comme visible à la figure 5 de la demande FR 2 883 670 D'une manière générale, le boîtier 32 comporte, comme visible dans les figures 2 à 5, une partie inférieure 34, formant un bac 34 de réception d'une ou d'une pluralité d'unités 20 de stockage d'énergie électrique.

Dans l'exemple représenté aux figures 2 à 5, le bac 34 comporte douze unités 20 de stockage d'énergie montées en série.

Les unités 20 sont ici des Ultra capacités appelées également « supercondensateurs ». Ces Ultra capacités se décharge et se recharge plus rapidement qu'une batterie classique de manière décrite par exemple dans le document WO 02/080334 précité. Bien entendu certaines au moins de ces unités 20 sont en variante des batteries ayant la même forme et la même taille que les Ultra capacités.

Les unités 20 de stockage présentent une apparence identique. Chaque unité 20 présente ainsi une forme cylindrique d'axe vertical. Chaque unité 20 est délimitée latéralement par une face cylindrique extérieure 36 et verticalement par une face horizontale circulaire d'extrémité supérieure 38 et par une face horizontale circulaire d'extrémité inférieure 40. Chaque unité 20 présente deux bornes 42 de liaison électrique. Chaque borne 42 s'étend en saillie verticale respectivement par rapport à la face 38 et par rapport à la face 40.

Le bac 34 est globalement de forme parallélépipédique a section globalement rectangulaire. Ce bac 34 est ouvert vers le haut, de manière décrite ci-après, et est fermé en bas par une paroi horizontale inférieure plane 48.

Ce bac est délimité latéralement par des faces verticales extérieures 51 ondulées, qui épousent les formes des unités 20 de stockage. Les faces 51 sont perpendiculaires à la paroi horizontale inférieure plane 48 constituant le fond du bac 34.

Dans un mode de réalisation la paroi inférieure 48 comporte de manière saillante des pattes ou oreilles trouées (non visibles) pour la fixation du bac 34 à une partie fixe du véhicule, telle qu'une partie froide de la carrosserie du véhicule, à l'aide d'organes de fixation, tel que des vis, des rivets ou des boulons, traversant les trous des pattes ou des oreilles.

Ici on n'a pas représenté la partie supérieure du boîtier 32 pour pouvoir voir les unités 20. Cette partie supérieure constitue un couvercle de fermeture du haut du bac 34.

Le bac 34 comporte au moins un logement 44 de réception d'au moins une unité 20 de stockage d'énergie électrique à Ultra capacité. Dans l'exemple représenté à la figure 2, le bac 34 est compartimenté en six logements 44 d'apparence identique dont chacun est susceptible de recevoir une paire d'unités 20 de stockage d'énergie à Ultra capacité. Les deux unités 20 de stockage de chaque paire sont longitudinalement adjacentes et sont donc reçues, suivant une caractéristique, dans un logement 44 commun d'orientation verticale. Ces logements 44 sont de forme oblongue.

Les bornes 42 des faces d'extrémité inférieure 40 des unités 20 de stockage de chaque paire sont connectées électriquement ensemble par l'intermédiaire d'une barre 45 réalisée en un matériau conducteur d'électricité tel que du cuivre, comme illustré à la figure 5. Des barres non visibles relient également les bornes 42 des faces supérieures.

Les barres sont agencées de manière à relier en série les unités 20 présentant ainsi une borne d'entrée et de sortie.

La position des bornes d'entrée et de sortie dépend des applications.

Chaque logement 44 comporte une ouverture supérieure 50, qui permet d'introduire la paire d'unité de stockage d'énergie électrique 20 par déplacement vertical vers le bas fermé Chaque logement 44 est fermé vers le bas par un fond intérieur horizontal formé par la paroi inférieure horizontale plane 48.

Comme représenté à la figure 3, la section horizontale de chaque logement 44 a globalement une forme de huit.

Plus précisément chaque logement 44 d'une paire d'unité 20 adjacentes est délimité par une paroi latérale 43 à face intérieure 46 de forme oblongue, ici globalement en forme de huit Cette face intérieure 46 présente (figures 2 et 3) deux portions circulaires reliées entre elles par deux portions centrales à faces planes en vis-à-vis l'une de l'autre. Les portions centrales se raccordent chacune aux extrémités des portions circulaires, qui s'étendent sur plus de 180° comme mieux visible à la figure 3.

Les faces planes des portions centrales ont globalement une forme rectangulaire et ont verticalement une dimension supérieure à leur dimension longitudinale comme visible à la figure 2. Chaque logement 44 est ainsi moins large au niveau des faces planes des portions centrales en vis-à-vis.

Les portions circulaires sont dimensionnées pour recevoir chacune une unité 20. Leur taille est donc définie par le diamètre de la face extérieure 36 d'une unité.

Ainsi, comme visible à la figure 3, chaque logement 44 de forme oblongue présente une longueur longitudinale sensiblement égale à deux fois le diamètre de chaque unité 20 de stockage, et une largeur transversale sensiblement égale au diamètre d'une unité 20 de stockage.

Comme visible à la figure 4 la face cylindrique 36 de chaque unité 20 de stockage est donc agencée au moins en partie à proximité de la face latérale intérieure 46 du logement 44 associé, avec un jeu latéral "j" d'insertion.

Les parois latérales 43 sont délimitées extérieurement en partie par les faces verticales extérieures 51 et en partie, de manière décrite ci-après, par la matière présente entre deux logements 44 adjacents. L'épaisseur de chaque paroi 43 est sensiblement identique pour chaque logement 44. L'épaisseur des parois latérales 43 est relativement faible au niveau des faces 51 de manière à favoriser les échanges de chaleur entre l'intérieur et l'extérieur du bac 34.

L'épaisseur des parois 43 est plus importante entre deux logements 44 adjacents comme visible à la figure 3.

Ainsi qu'il ressort de la description et des dessins, chaque logement 44 est de forme borgne et comporte ainsi une ouverture supérieure 50 qui permet d'introduire par déplacement vertical vers le bas les unités 20 de stockage.

Les logements 44 sont agencés par paires longitudinales sur trois rangées transversales. Chaque rangée comporte quatre unités 20. Cette disposition est compacte ; le bac pouvant ainsi avoir un encombrement similaire à celui d'une batterie de véhicule
Les logements 44 sont mitoyens, c'est-à-dire qu'au moins une partie de la paroi latérale 43 forme une cloison commune pour deux logements 44 adjacents. Ainsi, comme l'illustre la figure 5, une partie de la face extérieur 52A d'un logement 44A donné est susceptible de constituer la face intérieure 46B d'un logement 44B adjacent.

La face extérieure des parties de parois latérales 43 non mitoyennes forme une face extérieure 51 du bac 34.

Comme représenté aux figures 3 et 5, les deux unités 20 de stockage d'une paire sont tangentes en une ligne verticale de contact. Ainsi dans chaque logement 44, il existe un jeu longitudinal 53 entre deux portions en vis-à-vis des faces cylindriques 36 de chaque paire d'unités 20 de stockage de part et d'autre de la ligne de contact. Cette ligne de contact permet d'obtenir une température plus homogène des unités 20 d'une même paire.

En variante on supprime la ligne de contact en sorte qu'un léger jeu existe.

Lors des opérations de charge et de décharge, chaque unité 20 de stockage émet un fort flux de chaleur par ses faces d'extrémité supérieure 38 et inférieure 40, ainsi que par sa face cylindrique 36.

Afin de permettre une évacuation rapide de la chaleur produite par chaque unité 20 de stockage, et pour permettre un chauffage homogène de toutes les unités 20 de stockage reçues dans le bac 34, le bac 34 est selon une caractéristique réalisé en un matériau thermo-conducteur de manière à conduire le plus rapidement possible la chaleur produite par chaque unité 20 de stockage depuis la face intérieure 46 jusqu'à la face extérieure de la paroi latérale 43 du logement 44 associé.

Dans un mode de réalisation, le bac 34 est réalisé en une seule pièce en un unique matériau conducteur de la chaleur. Ce matériau est dans un mode de réalisation en matière moulable en sorte que le bac est venu de matière par moulage.

Dans un mode de réalisation le bac 34 est métallique.

Ce bac 34 est dans l'exemple de réalisation à base d'aluminium pour réduire son poids et pour obtenir un bac venu de matière par moulage.

En variante le bac est à base de magnésium. Il est par exemple en alliage de magnésium et d'aluminium.

Comme représenté aux figures 4 et 5, pour pouvoir insérer verticalement chaque unité 20 de stockage dans le logement 44 associé et/ou pour des contraintes inhérentes à la fabrication du bac 34, les faces intérieures 46 de chaque logement 44 présentent un angle de dépouille "α" par rapport à la direction verticale de manière que les faces intérieures 46 convergent vers le fond 48 du logement 44. Cet angle de dépouille permet également d'obtenir le bac en une seule pièce par moulage.

Ainsi est formé le jeu latéral "j" entre la face cylindrique 36 de chaque unité 20 de stockage et la face intérieure 46 du logement 44 associé. La couche d'air stagnant ainsi interposée entre la face cylindrique 36 de chaque unité 20 de stockage et la face intérieure 46 du logement 44 associé fait l'effet d'un isolant thermique.

Pour résoudre ce problème, une couche de conduction 54 réalisée en une substance ayant des propriétés de conduction thermique, est intercalée radialement sans jeu entre la face cylindrique 36 l'unité 20 de stockage et la face intérieure 46 du logement 44 associé.

La couche de conduction 54 remplit aussi avantageusement le jeu longitudinal 53 qui existe entre les unités 20 de stockage d'une paire. La couche de conduction est dans un mode de réalisation électriquement isolante.

Cette couche de conduction de chaleur 54 intercalée radialement sans jeu entre la face cylindrique 36 l'unité 20 de stockage et la face intérieure 46 du logement 44 associé consiste selon une caractéristique de l'invention en une résine thermo-conductrice ou en une colle thermo-conductrice.

Dans un mode de réalisation cette colle thermo-conductrice ou cette résine thermo-conductrice est électriquement isolante.

Ladite résine thermo-conductrice est à l'origine sous forme liquide ou visqueuse. Cette résine est injectée entre chaque unité 20 de stockage et la face intérieure 46 du logement 44 associé par remplissage du logement 44 après l'agencement des unités 20 de stockage. Ainsi ladite résine thermo-conductrice est intercalée entre les deux unités 20 de stockage de manière que les deux unités 20 de stockage adjacentes d'une paire soient à la même température.

Avantageusement, la résine thermo-conductrice 54 forme une couche de conduction de chaleur qui durcit après son injection de manière à caler latéralement, c'est-à-dire longitudinalement et transversalement, l'unité 20 de stockage dans le logement 44. La couche de conduction 54 durcie est dans un mode de réalisation déformable élastiquement de manière à absorber d'éventuels chocs.

Cette résine thermo-conductrice est donc souple. Elle sert à caler les unités 20.

Pour faciliter l'opération d'injection de la résine thermo-conductrice, les unités 20 de stockage peuvent préalablement être collées et calées au fond 48 du logement 44 associé par une couche de colle 56. En effet, lorsque les unités 20 de stockage ne sont pas calées, elles sont en équilibre instable sur la barre 45 associée comme représenté à la figure 5.

La colle utilisée pour réaliser la couche de colle 56 est de préférence un isolant électrique.

Avantageusement, la couche de colle 56 est réalisée en un matériau présentant des propriétés de conduction thermique.

Lors du montage, la couche de colle 56 est tout d'abord appliquée au fond 48 de chaque logement 44. Puis les paires d'unités 20 de stockage sont insérées verticalement par l'ouverture supérieure 50 dans les logements 44 associés.

Ensuite, la résine thermo-conductrice est injectée dans chaque logement 44 de manière à former la couche conductrice 54. L'épaisseur de cette couche de résine thermo-conductrice est avantageusement inférieure ou égale à 2 mm pour mieux évacuer la chaleur en combinaison avec le bac 34 thermo -conducteur. Cette épaisseur est dans un mode de réalisation globalement égale à 1 mm.

La colle 56 thermo-conductrice sert également à la fixation de l'unité de stockage 20 au bac 34.

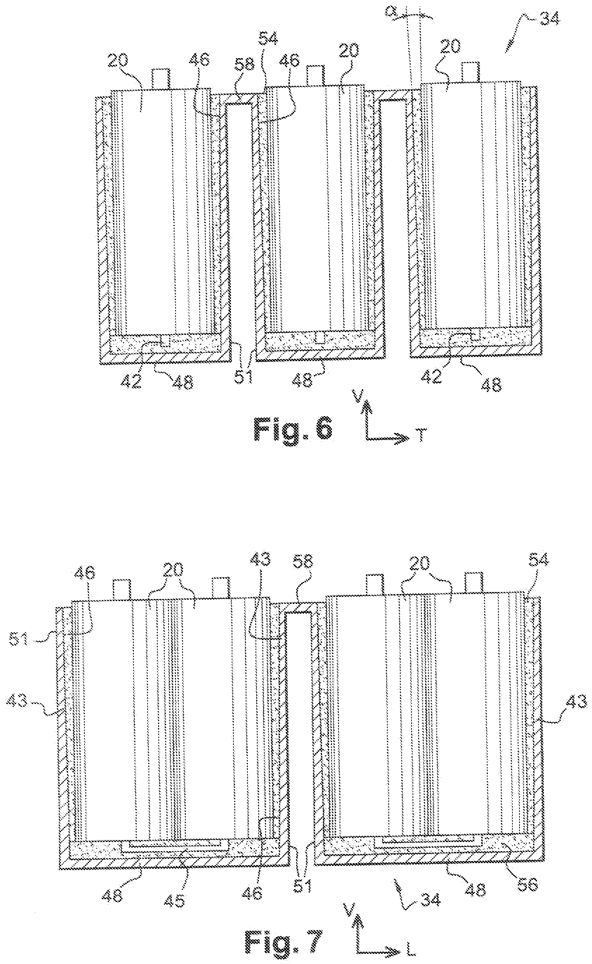

La colle 56 permet également de réduire la quantité de résine 54. En effet dans les figures 4 et 5 la résine s'étend sur toute la hauteur du logement 44. En variante, grâce à la colle 56, la résine peut s'étendre sur moins de 80% de la hauteur verticale du logement, par exemple sur 50% de la hauteur du logement 44. Il en est de même dans le deuxième mode de réalisation des figures 6 et 7. On appréciera que la forme du logement 44, globalement en forme de huit, permet de réduire la quantité et donc le volume de résine 54 thermo-conductrice utilisée.

En variante on remplace la couche 54 de résine thermo-conductrice par de la colle du même type que la colle 56.

En variante les couches 54 et 56 sont réalisées à l'aide d'une résine thermo-conductrice ayant des propriétés de collage.

Cette résine une fois durcie devient collante.

De manière précitée ont choisie une résine ayant, une fois durcie, des propriété de collage, de souplesse et de déformation élastique pour amortir les chocs.

Avantageusement, la résine thermo-conductrice durcit donc de manière à avoir une consistance solide et élastique

D'une manière générale la résine ou la colle selon l'invention permettent de réaliser une isolation permettant d'éviter une pénétration de l'eau ou de tout autre impurtée.

Lors des opérations de charge et de décharge des unités 20 de stockage, le flux de chaleur émis par chaque unité 20 de stockage à travers sa face cylindrique 36 est conduite directement et rapidement via la couche de conduction 54 jusqu'à la face intérieure 46 de chaque logement 44. Puis la chaleur est ensuite conduite jusqu'à la face extérieure de la paroi 43 associée.

Ainsi, une partie de la chaleur est directement conduite à l'extérieur du bac 34 via la face extérieure 51 du bac 34, tandis qu'une autre partie de la chaleur est conduite vers les autres logements 44 par les parois latérales 43 formant cloisons.

Le dispositif réalisé selon les enseignements de l'invention permet ainsi d'obtenir une température instantanée qui soit sensiblement homogène pour toutes les unités 20 de stockage agencées dans le bac 34, et toutes les unités 20 de stockage ont ainsi sensiblement la même durée de vie.

De plus, la chaleur émise par toutes les unités 20 de stockage est transmise directement ou indirectement par conduction jusqu'à la face extérieure 51 du bac 34.

Avantageusement, la face extérieure 51 du bac 34 est reliée thermiquement à des moyens de refroidissement tels qu'un courant d'air frais, un caloduc, ou tout autre moyen de refroidissement adapté.

Selon un deuxième mode de réalisation de l'invention qui est représenté aux figures 6 et 7, le bac 34 présente une apparence et structure similaire à celle décrite dans le premier mode de réalisation de l'invention.

Cependant, les logements 44 ne sont pas mitoyens, c'est-à-dire que chaque logement 44 est délimité latéralement par une paroi latérale 43 individuelle.

Les faces extérieures de la paroi latérale 43 individuelle de chaque logement 44 forment donc les faces extérieures 51 du bac 34. Les faces extérieures 51 des parois latérales 43 de chaque logement 44 sont donc espacées latéralement les unes des autres de manière que la chaleur émise par les unités 20 de stockage dans un logement 44 soit conduite directement à l'extérieur du bac 34 sans passer par les logements 44 voisins.

Le bac 34 comporte un plateau supérieur 58 depuis la face inférieure duquel les logements 44 s'étendent verticalement vers le bas. Les ouvertures supérieures de chaque logement 44 sont formées dans le plateau 58 du bac 34.

Le bac 34 est réalisé en une seule pièce par exemple par une opération de filage qui consiste à pousser verticalement vers le bas avec un piston des zones oblongues d'une plaque horizontale d'aluminium rendu ductile par chauffage pour former les logements 44.

Dans ce mode de réalisation comme dans le précédent, une couche de conduction 54 est intercalée entre la face cylindrique 36 de chaque unité 20 de stockage et la face intérieure 46 de chaque logement 44. Il est également prévu une couche de colle 56 pour coller les unités 20 au fond 48 du bac 34

Le bac 34 selon le deuxième mode de réalisation de l'invention permet ainsi d'augmenter l'aire cumulée des faces latérales extérieures 51 de manière à évacuer encore plus vite la chaleur produite par les unités 20 de stockage.

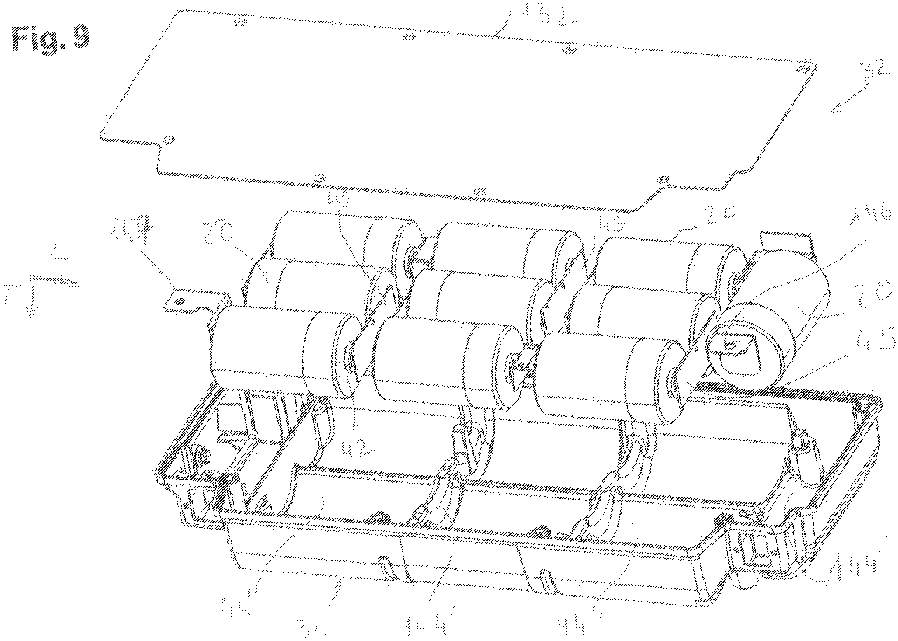

Selon un troisième mode de réalisation de l'invention qui est représenté dans la figure 9. Dans ce mode de réalisation, le dispositif comporte trois paires d'unités 20 de stockage adjacentes.

Le boîtier 32 est unique et constitue donc le bac de réception des unités 20. Il est donc prévu une seule et même pièce creusée pour formation de logements 234 de forme oblongue pour les unités 20. Les unités 20 sont introduites transversalement dans les logements 234. Ces logements sont d'orientation longitudinale, de la résine thermo-conductrice ou la colle thermo-conductrice 54 étant intercalée entre les faces intérieures des logements 234 et les faces extérieures des unités 20. Le boîtier est dans un mode de réalisation en aluminium. En variante le boîtier est en cuivre.

Les faces intérieures des logements 234 de forme oblongue sont délimitées par deux portions de forme semi-circulaire et par deux portions rectilignes reliant entre elles les extrémités circonférentielles des portions semi-circulaire.

Selon ce mode de réalisation, qui est applicable à tous les modes de réalisations précédemment décrits, les faces extérieures du boîtier 32 et donc du bac comportent des motifs en saillies tels que des ailettes 60 qui ou des picots, représentés en traits interrompus, de manière à augmenter la surface d'échange de chaleur entre l'intérieur du boîtier 32 et l'extérieur du boîtier 32. On voit en 135 des pattes de fixation du boîtier 32 à une partie fixe du véhicule telle que la carrosserie de celui-ci.

Ces pattes sont trouées pour la fixation du boîtier 32 par exemple à la carrosserie du véhicule à l'aide d'organes de fixation , tels que des vis en des boulons ou des rivets.

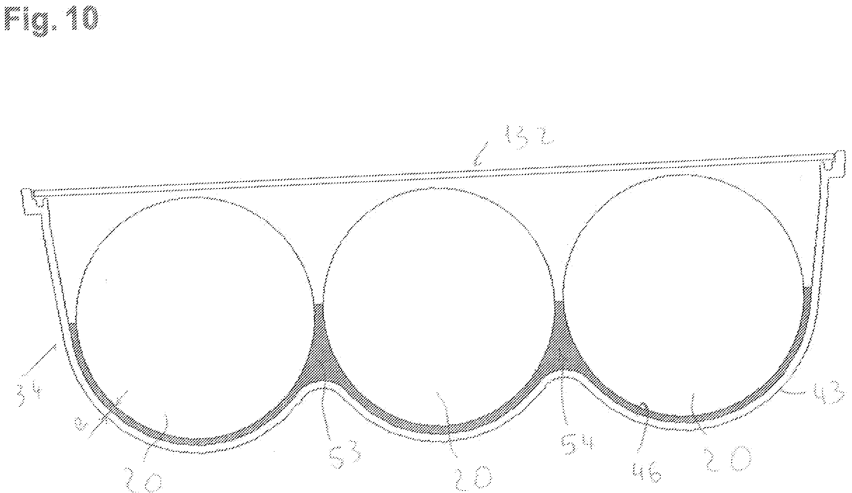

Dans le mode de réalisation des figures 9 et 10 les unités de stockage d'énergie 20 sont pour partie implantées longitudinalement et pour partie transversalement.

Dans ce mode de réalisation le boîtier 32 comporte un bac creux 34 avec un fond longitudinalement ondulé pour création de neufs logements longitudinaux 44' pour montage de neuf unités groupées trois par trois. Ces logements 44' sont délimités par des cloisons transversales 144' comme mieux visible à la figure 9.

Ces cloisons 144' sont creusées centralement pour le passage des bornes 42 des unités 20 concernées. Comme dans les figures précédentes les bornes des unités 20 sont connectées entre elles notamment par des barres conductrices 45 pour réaliser la mise en série des unités entre deux bornes 146, 147

Chaque logement 44' comporte un fond constituant une portion de cylindre.

Une autre unité 20 est également prévue à l'une des extrémités du bac 34.Ce bac 34 présente à cet effet un logement transversale 144 à l'image des logement 44' mais perpendiculaire à ceux-ci.

Une couche de résine thermo-conductrice 54 est intercalée sans jeu entre chaque unité 20 et la face intérieure 46 de la paroi 43 du logement 44', 144 associé comme dans les figures précédentes.

Les unités ne sont pas en contact les unes avec les autres comme mieux visible à la figure 10. L'épaisseur e de la résine au niveau de la paroi 43 est de manière précitée inférieure à 2mm pour mieux conduire la chaleur. L'épaisseur est ici égale à 1 mm.

De manière économique la résine s'étend sur moins de 80% de la hauteur verticale du bac 34 à fond ondulée. Elle s'étend ici globalement sur 50% de la hauteur verticale du bac 34 évasé vers l'extérieur comme visible à la figure 10. Ce bac 34 présente à son extrémité libre et sur son pourtour une surépaisseur non référencée configurée afin de former un rebord pour recevoir un couvercle plat 132 de fermeture du bac.

Cette surépaisseur présente un logement non référencé pour le montage d'un joint d'étanchéité non visible. Ce joint est pressé par le couvercle 132, troué localement pour le montage d'organe de fixation, tels que des vis, du couvercle 132 au bac 34.

La résine thermo-conductrice, ici électriquement isolante, est choisie ici pour, après son durcissement, présenter des propriétés de collage et de déformation élastique.

Cette résine est souple et également étanche. Les unités 20 sont donc fixées dans le bac 34 et calées par la résine collante.

Le couvercle 132 de fermeture du bac 34 constitue un capot de protection des unités 20.

Le bac 34 est par exemple à base d'aluminium et le couvercle 132 en tôle. Le bac est par exemple obtenu par moulage.

L'ensemble 34, 132, 20 est grâce à la résine 54 manipulable et transportable. Il en est de même dans les autres modes de réalisation.

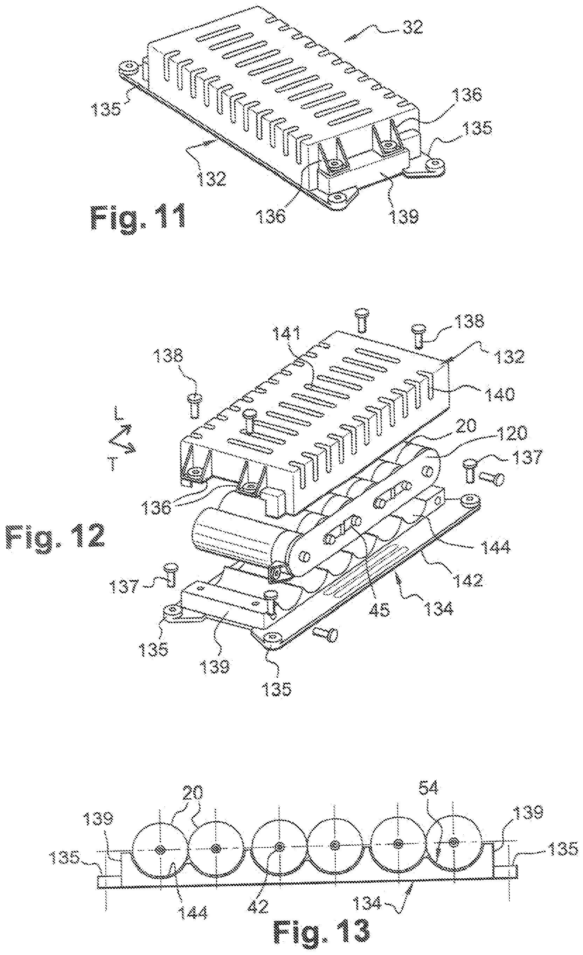

Dans le mode de réalisation des figures 11 à 13 le boîtier 32 comporte un bac 134 de réception des unités de stockage 20 d'énergie électrique relativement plat et coiffé entièrement par un couvercle 132 de forme creuse constituant un capot pour les unités 20 et le bac 134 comme visible à la figure 11. Le couvercle 132 présente dans ce mode de réalisation un fond de forme rectangulaire délimité par un rebord latéral perpendiculaire au fond. Ce bord latéral comporte deux parois latérales longitudinales et deux parois latérales transversales. Ce couvercle 132 est ici en aluminium. Le fond et les parois longitudinales du rebord du couvercle 132 sont dotés d'ouvertures respectivement 141, 40 pour mieux évacuer la chaleur. Dans ce mode de réalisation le boîtier 32 est monté par exemple dans le coffre ou l'habitacle du véhicule.

Les parois latérales transversales du rebord du couvercle sont dotées chacune de deux pattes nervurées pour fixation du couvercle 132 sur un montant latéral transversal 139 du bac à l'aide de vis 138 venant chacune se visser dans un trou taraudé du montant 139.

Le bac 134 comporte ici des logements de réception 144 des unités 20. Les logements 144 sont d'orientation transversale.

Les logements 144 sont configurés pour recevoir une paire d'unité de stockage 20 comme dans le premier mode de réalisation. Ces logements sont délimités par deux portions globalement semi cylindrique de taille adaptée à recevoir la face cylindrique extérieur des unités 20. Chaque logement 144 est globalement en forme de demi huit. Les deux unités 20 d'une même paire sont ici en contact local l'une avec l'autre ici selon une ligne transversale. En variante il n'y a pas de contact comme à la figure 10. Une couche de conduction de chaleur 54 est intercalée radialement sans jeu entre la face interne du logement 144 et la face cylindrique externe des unités 20 de la paire comme dans le premier mode de réalisation des figures 2 à 5. La couche 54 est par exemple une résine thermo-conductrice Le bac ici en aluminium. En variante on peut utiliser de manière précitée de la colle thermo-conductrice.

Le bac 134 est en forme de plaque rectangulaire creusée transversalement pour formation ici de trois paires de logements 144 de réception de trois paires d'unité 20 à Ultra-capacité.

Le bac 134 est par exemple métallique. Il est dans un mode de réalisation en aluminium.

Ce bac 134 est délimité latéralement par ses deux montants transversaux 139 de fixation du couvercle 132 et longitudinalement par deux traverses 142. Chaque traverse 142 comporte à chacune de ses extrémité une oreille 135 troué 135 se raccordant chacune à une extrémité d'un montant 139.

Les traverses 142 permettent d'augmenter la surface de contact avec la source froide.

Les oreilles 135, comme dans la figure 10, sont des oreilles de fixation du boîtier 32 à une partie ici froide du véhicule, telle que la carrosserie de celui-ci. La fixation est réalisée ici à l'aide de vis 137, en variante de rivets, de boulons ou de goujons, traversant chacun le trou d'une oreille 135.

On voit à la figure 12 les barres de liaison 45 électrique entre les bornes 42 des unités 20 ainsi qu'un circuit imprimé 145 comportant des composants électroniques pour équilibrer les unités 20 lorsque celles-ci consistent en des Ultra capacités ou super condensateurs afin que celles-ci soit chargées électriquement de manière uniforme.

Les unités 20, reliées ici en série par les barres 45 et le circuit imprimé 145, forment par avance un module 120, qui se monte dans le bac 134 et est coiffé par le couvercle de protection 132.

Le couvercle 132 de protection coiffe et retient le module 120.

En variante le couvercle 132 présente des logements comme le bac 134 ; les unités 20 étant prise en sandwich entre les logements globalement semi-cylindrique et en vis à vis du bac 134 et du couvercle 132.

Toutes les combinaisons et retournements du dispositif d'alimentation électrique sont possibles.

Ainsi on peut effectuer une rotation de 90° par exemple dans le mode de réalisation des figures 2 à 5 ; le fond 48 étant alors d'orientation verticale.

En variante le bac 134 des figures 11 à 13 est à paroi extérieure ondulée comme dans les figures 2 à 5.

En variante le couvercle 132 des figures 11 à 13 présente des logements de forme semi-cylindrique comme le bac 134.

Dans ce cas les logements des unités sont en deux parties et ont globalement une forme de dimension adaptée à la surface externe des unités20 pour loger celles-ci.

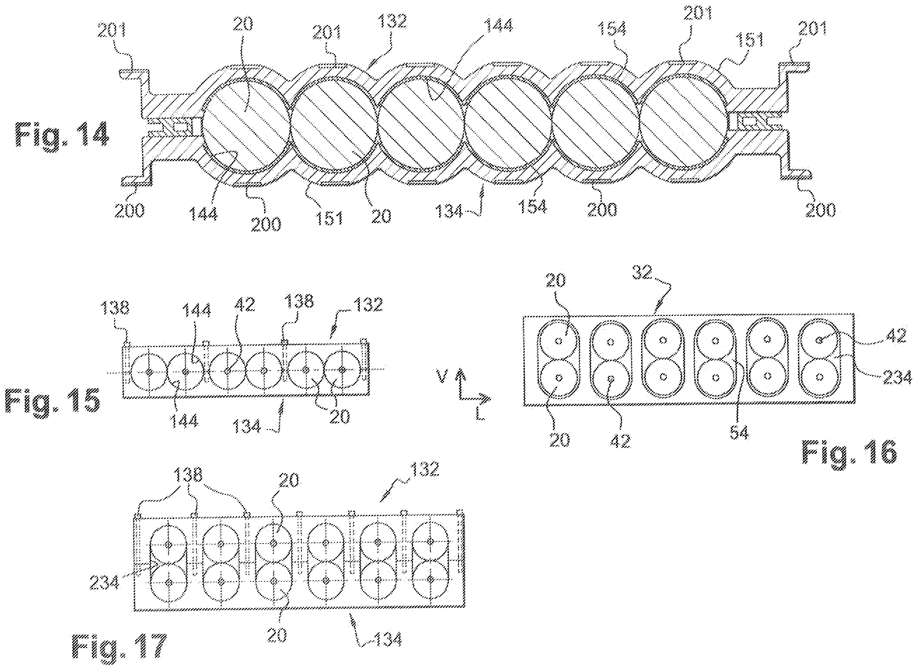

De tels logements sont visibles dans les figures 14 et 15.

En variante, comme visible dans la figure 14, le bac 134 et le couvercle 132 sont en matériau conducteur de chaleur et présentent chacun une paroi extérieure ondulée 151, comme dans les figures 2 à 5, ainsi que des logements 34 pour les unités 20.

Par rapport au mode de réalisation des figures 2 à 5 il est effectué une rotation de 90° les parois 151 étant d'orientation transversale.

On voit en 200 les surfaces de contact partiel entre la paroi extérieure du bac 134 et une source froide, telle qu'une partie froide de la carrosserie du véhicule automobile, en 201 les surfaces de contact partiel entre la paroi extérieure du couvercle 132 et l'air ou une source froide et en 154 les surfaces de contact entre les unité de stockage d'énergie 20 et les surfaces intérieures des logements 144. La face extérieure 151 des logements 144 est donc ondulée. Ces logements

Les surfaces 154 appartiennent dans un mode de réalisation à une substance thermo-conductrice, telle qu'une résine thermo-conductrice et électriquement isolante comme dans les figures 11 à 13.

En variante, comme visible à la figure 15, les unités de stockage d'énergie 20 sont en contact via par exemple une colle thermo-conductrice ou une colle thermo-conductrice avec les logements 144 du couvercle 132 et du bac 134 en matériau thermo-conducteur. Dans cette variante la surface de contact entre le bac 134 et la source froide est réalisé sur toute la longueur du bac 134 à surface extérieure plane. De même le contact entre la surface extérieure du couvercle 132 et l'air ou la source froide est réalisé sur toute la longueur du couvercle 132.

Bien entendu la longueur des surfaces de contact dépend des applications

Par exemple à la figure 14 au moins deux surfaces 200 ou 201 peuvent être reliées l'une à l'autre et ne former qu'une seule surface.

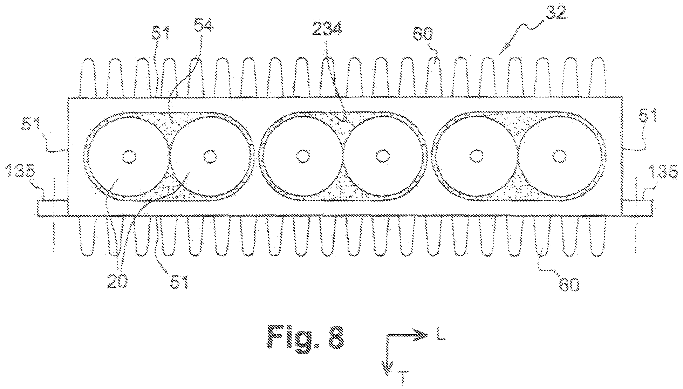

Bien entendu les surfaces 201 peuvent être équipées de motifs en saillie comme à la figure 8.

On notera que le couvercle 132 de la figure 15 est relié au bac134 à l'aide des organes de fixation 138, tels que des vis, se vissant dans l'épaisseur de matière présente entre deux logements 34. Il est formé ainsi un boîtier en deux parties 132, 134 formant un serre- joint pour les unités 20, qui sont ainsi fixées..

Bien entendu le nombre d'unités 20 dépend des applications et notamment du voltage nécessaire. Il peut être égal à 6, 12 ou à un nombre différent de 6 ou 12. Par exemple ces unités peuvent comprendre six unités 20 à Ultra- capacités et deux unité 20 en forme de batterie classique

Dans le mode de réalisation de la figure 10 on peut orienter verticalement les logements 234 et doubler le nombre de ceux-ci comme visible à la figure 16.

On augmente que l'épaisseur du boîtier 32 tout en conservant la longueur axiale de celui-ci. 32.

Cela est applicable au mode de réalisation de la figure 15, comme visible à la figure 17.

On peut monter le boîtier 32 dans une zone protégée, telle que le coffre ou l'habitacle du véhicule automobile.

. Bien entendu les unités des figures 11 à 15 et les bacs des figures 11 à 15 peuvent être orientés verticalement.

Bien entendu la section des unités 20 est en variante autre que circulaire. Ces unités 20 sont par exemple de forme ovale ou polygonale. Il en est de même des logements de réception des unités 20.

On peut orienter les logements horizontalement et verticalement. Par exemple le boîtier de la figure 16 peut recevoir huit unités 20. Dans ce cas le boîtier comporte deux logements verticaux 234 et deux logements horizontaux.

Les unités 20 peuvent consister en deux groupes montés en parallèle ; chaque groupe comportant des unités montées en série.

Ainsi, grâce au bac 32, 34, 134, 334 réalisé selon les enseignements de l'invention, la chaleur produite par les unités 20 de stockage est évacuée très rapidement, ce qui évite une augmentation brutale de la température au-delà de la température maximale de fonctionnement des unités 20 de stockage.

De plus, la présence d'une couche de conduction permet d'évacuer la chaleur par conduction en éliminant les zones d'air stagnant qui résistent au passage de la chaleur.

Les unités 20 ont une température homogène par conduction thermique grâce notamment au bac en matériau thermo-conducteur.

Ce bac est en contact indirect avec les unités 20 et avec une source froide. Cette source froide est dans un mode de réalisation la tôle de la carrosserie du véhicule. En variante il peut s'agir d'au moins une cellule à effet Peletier avec une face chaude inférieure et une face froide supérieure en contact avec le bac.

En variante un courant d'air froid balaye des saillies solidaires du bac, tel que des ailettes du type de la figure 10.

La circulation du courant d'air est réalisée par exemple à l'aide d'au moins un ventilateur, par exemple piloté en fonction de la température des unités 20.

Au moins un caloduc peut relier le bac à une source froide par exemple une plaque froide.

En variante le bac et le couvercle sont en matière thermiquement-conductrice et électriquement isolante.

Bien entendu lorsque la surface externe de l'unité 20 est électriquement isolante, le bac et le couvercle des figures 15 et 17 peuvent être métallique.

Lorsque la substance 54 est électriquement isolante, le bac peut être électriquement conducteur ou électriquement isolant. Cette substance permet de rendre plus homogène la température des unité 20d'une même paire.

On appréciera que dans certaines figures les unités de stockage 20 sont montées par paire en étant en contact l'une avec l'autre ce qui permet de mieux homogénéiser encore la température des unités 20.

On notera également que les logements 144 et 234 sont mitoyens et que le bac inférieur 32, 34, 134, 334 est un bac de support des unités 20.

On notera également que les logements globalement en forme de huit ont une forme oblongue.

A titre d'exemple on peut utiliser comme résine une résine du type polyuréthane à deux composants dont l'un est un durcisseur. Par exemple on peut utiliser une résine à deux composants vendue par la société RAIGI sous la référence RAIGITANE 4759/RAIGIDUR HR formant un système polyuréthanne liquide à température ambiante. Cette résine de couleur noir est souple (50 Shore HR) et a une excellente résistance aux chocs thermiques, et une très bonne adhérence sur les pièces métalliques et plastique. Cette résine est donc collante.

En variante on peut utiliser un système polyuréthanne à deux composant vendu par la société WEVO (résine PD4431FL et durcisseur 300) de dureté Shore de 50-55.

On appréciera que la colle sert à limiter les surchauffes autour d'une température variant dans une plus grande plage.

La colle est électriquement isolante et reste à l'état solide. Elle sert à caler les unités de stockage d'énergie.

## Revendications

1. Dispositif (10) d'alimentation électrique pour un véhicule automobile, qui comporte un bac (32, 34, 134), dans lequel est agencé au moins une unité (20) de stockage d'énergie électrique à Ultra capacité qui est susceptible d'émettre de la chaleur, ledit bac (32, 34, 134, 334) comportant au moins un logement (44, 144, 234) de réception d'au moins une unité (20) de stockage d'énergie électrique, dans lequel le bac (32, 34, 134), d'une part, est réalisé en un matériau thermo-conducteur de manière à conduire la chaleur émise par l'unité de stockage depuis la face intérieure (46) jusqu'à la face extérieure (51, 52, 151) de la paroi (43) dudit logement (44, 144, 234) et d'autre part est compartimenté en une pluralité de logements (44, 44' 144) destinés à loger chacun au moins une unité (20) de stockage, la paroi (43) de chaque logement étant réalisée en ledit matériau thermo-conducteur; **caractérisé en ce qu'**une couche de conduction de chaleur (54) réalisée en une colle thermo-conductrice ou en une résine thermo-conductrice est intercalée sans jeu entre l'unité (20) de stockage et la face intérieure (46) de la paroi (43) du logement (44, 144, 234) associé de manière à conduire la chaleur émise par l'unité (20) de stockage directement jusqu'à la face intérieure (46) de la paroi (43) du logement (44, 144, 234).

2. Dispositif (10) d'alimentation selon la revendication précédente, **caractérisé en ce que** ladite résine thermo-conductrice et la dite colle thermo-conductrice sont électriquement isolantes.

3. Dispositif (10) d'alimentation selon l'une quelconque des revendications précédentes, **caractérisé en ce que** ladite résine thermo-conductrice est injectée entre l'unité (20) de stockage et la paroi (43) du logement (44).

4. Dispositif (10) d'alimentation selon la revendication précédente, **caractérisé en ce que** la résine thermo-conductrice durcit après son injection de manière à caler l'unité (20) de stockage dans le logement (44).

5. Dispositif (10) d'alimentation selon la revendication précédente, **caractérisé en ce que** la résine thermo-conductrice durcie est déformable élastiquement.

6. Dispositif (10) d'alimentation selon la revendication 4 ou 5, **caractérisé en ce que** la résine thermo-conductrice durcie est adhérente.

7. Dispositif (10) d'alimentation selon l'une quelconque des revendications précédentes, **caractérisé en ce que** les logements (44, 144, 234) sont mitoyens.

8. Dispositif (10) d'alimentation selon l'une quelconque des revendications 1 à 6, **caractérisé en ce que** chaque logement (44) comporte une paroi individuelle (43) de manière que les faces extérieures (51) des logements (44) forment la face extérieure (51) du bac (34).

9. Dispositif (10) d'alimentation selon l'une quelconque des revendications précédentes, caractérisé en ce la face extérieur (51, 151) du logement (44, 144) est ondulée.

10. Dispositif (10) d'alimentation selon l'une quelconque des revendications précédentes, **caractérisé en ce que** le logement est borgne (44) et **en ce que** les unités (20) de stockage d'énergie électrique sont calées au fond (48) du logement borgne (44) par une couche de colle (56) thermo-conductrice.

11. Dispositif (10) d'alimentation selon l'une quelconque des revendications précédentes, **caractérisé en ce que** le logement (44, 144, 234) est un logement de réception d'une paire d'unité de stockage d'énergie électrique, qui sont agencées de manière adjacente dans le logement (44, 144, 234) de réception commun de forme oblongue.

12. Dispositif (10) d'alimentation selon la revendication 11 ou 12, **caractérisé en ce que** le logement commun a globalement une forme de huit.

13. Dispositif (10) d'alimentation selon la revendication 11, **caractérisé en ce que** chaque logement (144) est globalement en forme de demi huit.

14. Dispositif (10) d'alimentation selon l'une quelconque des revendications précédentes, **caractérisé en ce que** le bac (44, 134) est métallique.

15. Dispositif (10) d'alimentation selon l'une quelconque des revendications précédentes, **caractérisé en ce que** la couche de résine thermo-conductrice est inférieure ou égale à 2 mm.

## Patentansprüche

1. Stromversorgungsvorrichtung (10) für ein Kraftfahrzeug, die einen Behälter (32, 34, 134) aufweist, in dem mindestens eine Einheit (20) zum Speichern elektrischer Energie mit Ultra-Kapazität angeordnet ist, die Wärme abgeben kann, wobei der Behälter (32, 34, 134, 334) mindestens einen Aufnahmesitz (44, 144, 234) mindestens einer Einheit (20) zum Speichern elektrischer Energie aufweist, wobei der Behälter (32, 34, 134) einerseits aus einem wärmeleitenden Material hergestellt ist, um die von der Speichereinheit abgegebene Wärme von der Innenseite (46) bis zur Außenseite (51, 52, 151) der Wand (43) des Sitzes (44, 144, 234) zu leiten, und andererseits in eine Vielzahl von Sitzen (44, 44', 144) aufgeteilt ist, die dazu bestimmt sind, je mindestens eine Speichereinheit (20) aufzunehmen, wobei die Wand (43) jedes Sitzes aus dem wärmeleitenden Material hergestellt ist, **dadurch gekennzeichnet, dass** eine Wärmeleitungsschicht (54) aus einem wärmeleitenden Klebstoff oder aus einem wärmeleitenden Harz ohne Spiel zwischen die Speichereinheit (20) und die Innenseite (46) der Wand (43) des zugeordneten Sitzes (44, 144, 234) eingefügt ist, um die von der Speichereinheit (20) abgegebene Wärme direkt bis zur Innenseite (46) der Wand (43) des Sitzes (44, 144, 234) zu leiten.

2. Versorgungsvorrichtung (10) nach dem vorhergehenden Anspruch, **dadurch gekennzeichnet, dass** das wärmeleitende Harz und der wärmeleitende Klebstoff elektrisch isolierend sind.

3. Versorgungsvorrichtung (10) nach einem der vorhergehenden Ansprüche, **dadurch gekennzeichnet, dass** das wärmeleitende Harz zwischen die Speichereinheit (20) und die Wand (43) des Sitzes (44) eingespritzt wird.

4. Versorgungsvorrichtung (10) nach dem vorhergehenden Anspruch, **dadurch gekennzeichnet, dass** das wärmeleitende Harz nach seinem Einspritzen aushärtet, um die Speichereinheit (20) im Sitz (44) zu fixieren.

5. Versorgungsvorrichtung (10) nach dem vorhergehenden Anspruch, **dadurch gekennzeichnet, dass** das gehärtete wärmeleitende Harz elastisch verformbar ist.

6. Versorgungsvorrichtung (10) nach Anspruch 4 oder 5, **dadurch gekennzeichnet, dass** das gehärtete wärmeleitende Harz haftend ist.

7. Versorgungsvorrichtung (10) nach einem der vorhergehenden Ansprüche, **dadurch gekennzeichnet, dass** die Sitze (44, 144, 234) aneinander angrenzen.

8. Versorgungsvorrichtung (10) nach einem der Ansprüche 1 bis 6, **dadurch gekennzeichnet, dass** jeder Sitz (44) eine individuelle Wand (43) aufweist, so dass die Außenseiten (51) der Sitze (44) die Außenseite (51) des Behälters (34) bilden.

9. Versorgungsvorrichtung (10) nach einem der vorhergehenden Ansprüche, **dadurch gekennzeichnet, dass** die Außenseite (51, 151) des Sitzes (44, 144) gewellt ist.

10. Versorgungsvorrichtung (10) nach einem der vorhergehenden Ansprüche, **dadurch gekennzeichnet, dass** der Sitz (44) einseitig offen ist, und dass die Speichereinheiten (20) elektrischer Energie am Boden (48) des einseitig offenen Sitzes (44) durch eine wärmeleitende Klebstoffschicht (56) fixiert sind.

11. Versorgungsvorrichtung (10) nach einem der vorhergehenden Ansprüche, **dadurch gekennzeichnet, dass** der Sitz (44, 144, 234) ein Aufnahmesitz eines Paars von Speichereinheiten elektrischer Energie ist, die nebeneinander im gemeinsamen Aufnahmesitz länglicher Form (44, 144, 234) angeordnet sind.

12. Versorgungsvorrichtung (10) nach Anspruch 11 oder 12, **dadurch gekennzeichnet, dass** der gemeinsame Sitz global die Form einer Acht hat.

13. Versorgungsvorrichtung (10) nach Anspruch 11, **dadurch gekennzeichnet, dass** jeder Sitz (144) global die Form einer halben Acht hat.

14. Versorgungsvorrichtung (10) nach einem der vorhergehenden Ansprüche, **dadurch gekennzeichnet, dass** der Behälter (44, 134) metallisch ist.

15. Versorgungsvorrichtung (10) nach einem der vorhergehenden Ansprüche, **dadurch gekennzeichnet, dass** die wärmeleitende Harzschicht geringer als oder gleich 2 mm ist.

## Claims

1. Electrical power supply device (10) for a motor vehicle, which comprises a tray (32, 34, 134), in which is arranged at least one ultra-high capacity electrical energy storage unit (20) which is likely to emit heat, said tray (32, 34, 134, 334) comprising at least one housing (44, 144, 234) for accommodating at least one electrical energy storage unit (20), in which the tray (32, 34, 134), on the one hand, is produced in a thermally conductive material so as to conduct the heat emitted by the storage unit from the inner face (46) to the outer face (51, 52, 151) of the wall (43) of said housing (44, 144, 234) and, on the other hand, is divided up into a plurality of housings (44, 44', 144) intended to each house at least one storage unit (20), the wall (43) of each housing being produced in said thermally conductive material, **characterized in that** a heat conducting layer (54) produced in a thermally conductive glue or in a thermally conductive resin is inserted without play between the storage unit (20) and the inner face (46) of the wall (43) of the associated housing (44, 144, 234) so as to conduct the heat emitted by the storage unit (20) directly to the inner face (46) of the wall (43) of the housing (44, 144, 234).

2. Power supply device (10) according to the preceding claim, **characterized in that** said thermally conductive resin and said thermally conductive glue are electrically insulating.

3. Power supply device (10) according to either one of the preceding claims, **characterized in that** said thermally conductive resin is injected between the storage unit (20) and the wall (43) of the housing (44).

4. Power supply device (10) according to the preceding claim, **characterized in that** the thermally conductive resin hardens after the injection thereof so as to wedge the storage unit (20) in the housing (44).

5. Power supply device (10) according to the preceding claim, **characterized in that** the hardened thermally conductive resin is elastically deformable.

6. Power supply device (10) according to Claim 4 or 5, **characterized in that** the hardened thermally conductive resin is adhesive.

7. Power supply device (10) according to any one of the preceding claims, **characterized in that** the housings (44, 144, 234) are adjacent to one another.

8. Power supply device (10) according to any one of Claims 1 to 6, **characterized in that** each housing (44) comprises an individual wall (43) such that the outer faces (51) of the housings (44) form the outer face (51) of the tray (34).

9. Power supply device (10) according to any one of the preceding claims, **characterized in that** the outer face (51, 151) of the housing (44, 144) is corrugated.

10. Power supply device (10) according to any one of the preceding claims, **characterized in that** the housing is blind (44) and **in that** the electrical energy storage units (20) are wedged at the bottom (48) of the blind housing (44) by a layer of thermally conductive glue (56).

11. Power supply device (10) according to any one of the preceding claims, **characterized in that** the housing (44, 144, 234) is a housing accommodating a pair of electrical energy storage units, which are arranged adjacent to one another in the oblong common accommodation housing (44, 144, 234).

12. Power supply device (10) according to Claim 11 or 12, **characterized in that** the common housing has a generally figure-of-eight form.

13. Power supply device (10) according to Claim 11, **characterized in that** each housing (144) has an overall half-figure-of-eight form.

14. Power supply device (10) according to any one of the preceding claims, **characterized in that** the tray (44, 134) is of metal.

15. Power supply device (10) according to any one of the preceding claims, **characterized in that** the layer of thermally conductive resin is less than or equal to 2 mm.
